# EUROPÄISCHE PATENTSCHRIFT

(11) **EP 0 645 864 B1**
(45) Veröffentlichungstag und Bekanntmachung des Hinweises auf die Patenterteilung: **05.03.1997**
(21) Anmeldenummer: 94115065.8
(22) Anmeldetag: 23.09.1994
(51) Int. Cl.: H02G 15/013

(54) **Verfahren zum Abdichten von Kabelmuffen zum Verbinden und/oder Verzweigen von Energie- und Nachrichtenkabeln und Kabelmuffe zur Durchführung des Verfahrens**
Process for sealing cable sleeves for joining and/or branching of power and telecommunications cables and cable sleeve for carrying out the process
Procédé d'étanchéification de manchons de câbles pour la jonction et/ou la dérivation de câbles d'énergie et de télécommunication et manchon de câbles pour la mise en oeuvre du procédé

(30) Priorität: 24.09.1993 DE 4332592
(43) Veröffentlichungstag der Anmeldung: 29.03.1995
(73) Patentinhaber: Zittauer Kunststoff GmbH, D-02763 Zittau (DE)
(72) Erfinder: Pilling, Jürgen, Prof. Dr.-Ing. Dipl.-Ing., D-02794 Spitzkunnersdorf (DE); Köhler, Dirk, D-02796 Jonsdorf (DE)
(74) Vertreter: Allgeier, Kurt

(56) Entgegenhaltungen:
- DE-A- 2 632 325
- DE-A- 3 301 934
- DE-U- 6 950 007
- FR-A- 2 194 061
- GB-A- 1 187 920

## Beschreibung

Die Erfindung betrifft ein Verfahren zum Abdichten von Kabelmuffen zum Verbinden und/oder Verzweigen von Energie- und Nachrichtenkabeln mit wenigstens einem Dicht- oder Muffenraum, in dem die zu verbindenden oder zu verzweigenden Kabel mit ihren Verbindungselementen zusammengeführt werden, wobei der im Muffenkörper gebildete Dichtraum bis auf eine verschliessbare Einfüllöffnung abgeschlossen wird, und eine Kabelmuffe zur Durchführung des Verfahrens.

Zum Abdichten derartiger Kabelmuffen sind verschiedenartige Verfahrensweisen gebräuchlich, die von der Bauweise der Kabelmuffe selbst bestimmt sind, und die von deren Verwendungszweck bzw. dem Einsatzfall abhängig sind. Bei allen Muffentypen, die im Freien oder in Kabelkanälen im Erdreich verwendet werden, ist bekanntlich absolute Dichtigkeit gegen das Eindringen von Feuchtigkeit erforderlich. Um diese Dichtigkeit zuverlässig und nachhaltig zu erzielen, werden die meist zwei- oder mehrteiligen Muffen durch Einfüllen einer Vergussmasse in die Hohlräume in diesen Innenräumen feuchtigkeits- und wasserdicht versiegelt. Zwar sind die Teil-Schalen dieser Vergussmuffen mittels Spannvorrichtungen fest und mittels Dichtungen auch abgedichtet miteinander verbunden, jedoch sind sie wegen der Versiegelung nicht mehr wiederverwendbar, zumeist auch nicht mehr zu öffnen. Bei Änderungen der Verkabelung können die Kabelenden in der Regel nur durch die Zerstörung der Muffen wieder freigelegt werden, was meist einen erheblichen manuellen Arbeitsaufwand erfordert.

Auch ein anderer Typ von Kabelmuffen, die sog. Schrumpf-Muffen sind bei Änderungen der Verkabelung in der Regel nicht wiederverwendbar, sondern müssen ebenfalls gewaltsam geöffnet und dabei zerstört werden.

Der Erfinder hat unter Berücksichtigung dieser Gegebenheiten das Bedürfnis erkannt, in zahlreichen praktischen Einsatzfällen die bereits eingebauten Kabelmuffen zum Zweck einer Änderung der Verkabelung öffnen und das Abdichtmittel zerstörungsfrei zu entfernen, um die Kabelenden freizulegen. Damit soll erreicht werden, nach Änderung der Kabelverbindungen oder gegebenenfalls Einsetzen zusätzlicher Verbindungen die Kabelmuffe wieder erneut schliessen und abdichten zu können.

Der Forderung dieser Aufgabenstellung wird erfindungsgemäss durch die Einführung eines neuartigen Dichtmittels und ferner dadurch entsprochen, dass
a) durch die Einfüllöffnung der Dichtraum mit einer ihn völlig ausfüllenden Schüttung aus kugel- oder stabförmigen, granulierten und zusammenpressbaren Dichtkörpern gefüllt und darauf
b) diese Schüttung durch Ausübung eines mechanischen Druckes mit einer zur elastischen Verformung der Dichtkörper ausreichenden Druckkraft zusammengepresst wird, so dass die Dichtkörper eine nahezu homogene, den Dichtraum ausfüllende Dichtungsmasse bilden, und darauf
c) der Dichtraum unter Aufrechterhaltung der Druckkraft abgeschlossen wird.

Die in wenigstens einem in der Kabelmuffe gebildeten Dichtraum zusammengeführten Kabel können von der Schüttung aus den Dichtkörpern allseitig umgeben werden.

Nach einer anderen erfindungsgemässen Verfahrensweise werden die zu verbindenden Kabel mit ihren Verbindungselementen in einem Muffenraum zusammengeführt, welcher gegenüber dem oder den Dichtraum oder Dichträumen abgetrennt wird, wobei dann der oder die Dichträume mit Dichtkörpern gefüllt und diese unter einen Pressdruck gesetzt und gehalten werden. Diese Vorgehensweise eignet sich vor allem für Kabelmuffen von einer bestimmten Mindestgrösse und bietet dann den Vorteil, dass die Kabelverbindungsstellen im Falle notwendiger Montage- oder Reparaturarbeiten leichter zugänglich sind.

Die elastischen Dichtkörper werden unter ausreichendem Druck den Dichtraum oder die Dichträume der Kabelmuffe ausfüllen und sich dabei verformend nahezu wie eine homogene Masse verhalten, so dass alle Hohlräume des Dichtraumes verfüllt sind. Bei kleinräumigen Kabelmuffen kann auch der gesamte innere Raum als Dichtraum ausgebildet und mit den Dichtkörpern gefüllt sein. Wie Versuche ergeben haben, ist durch die erfindungsgemässe Verfahrensweise eine vollständige Dichtigkeit der Kabelmuffe ohne weiteres erreichbar. Soll etwas an der Verkabelung geändert werden, wobei u.U. sogar eine andere, eventuell grössere oder auch kleinere Kabelmuffe zum Einsatz gelangen soll, so kann die Muffe leicht geöffnet, und es kann die aus den Dichtkörpern bestehende Schüttung ohne weiteres herausgenommen und es können somit auf diese Weise die Kabelenden freigelegt werden, ohne dass es zu einer Beschädigung oder Zerstörung der Kabelmuffe kommt. Im Bedarfsfall ist diese samt den Dichtkörpern wiederverwendbar.

Für das Material dieser Dichtkörper wird ein Elastomer mit einer Shore-Härte bis zu A 80 vorgeschlagen, vorzugsweise einer Shore-Härte im Bereich von ca. A 50. Weiterhin ist vorgesehen, dass die Dichtkörper einen Durchmesser und/oder eine Länge zwischen 0,5 und 5,0 mm aufweisen. Die Dichtkörper sind in Elastizität, Form, Grösse und Härte derart beschaffen, dass sie sich auf ca. 50 bis 80 Vol-% ihres Ausgangsvolumens zusammenpressen lassen und sich dabei wie eine verformbare nahezu homogene Masse verhalten.

Es sind bereits Kabelmuffen etwa vergleichbarer Art bekannt, bei denen der Muffen-Innenraum mit Füllmaterial versehen ist, wie sich beispielsweise aus der GB 11 87 920 ergibt. Dort wird die Muffe mit Pellets oder Granulat vorzugsweise aus PVC gefüllt und anschliessend mit Acrylharz drucklos vergossen, um die Zwischenräume abdichtend auszufüllen; damit ist auch eine unerwünschte Warmbehandlung verbunden.

Eine ähnliche Ausführung ist der FR 2.194.061 zu entnehmen, mit der Kugeln aus einem Isoliermaterial als Füllstoff vorgeschlagen werden, und bei der die Zwischenräume zwischen den Kugeln ebenfalls mit Acrylharz drucklos vergossen werden.

Auch die DE 21 05 892 B2 zeigt demgegenüber keine wesentliche Verbeserung. Die Muffe wird mit Hohlkugeln aus einem thermoplastischen Kunststoff, z.B. aus Polystyrol, gefüllt und darauf mit einer Giessharzmasse - ebenfalls drucklos-ausgegossen, um eine Dichtigkeit zu erzielen.

Demgegenüber offenbart auch die DE 33 01 934 A 1 keine Verbesserung, weil die Abdichtung des Muffenkörpers dort durch Einfüllen eines wärmehärtenden, selbstvernetzenden Giessharzes erzielt werden soll.

Die bekannten Dichtungsverfahren und Muffen dieser Art weisen sämtlich den gleichen Nachteil auf, dass sie einer Warmbehandlung unterworfen werden müssen, und dass sie wegen der verwendeten Vergussmassen nur unter Beschädigung oder Zerstörung geöffnet werden können.

Die Kabelmuffe nach der Erfindung kann jederzeit ohne Beschädigung oder Zerstörung geöffnet und wieder verschlossen werden. Sie ist mit einer Aussen- bzw. Grundhülse und wenigstens an einem Ende mit einer abnehmbaren, den mit Dichtkörpern gefüllten Dichtraum abschliessenden Einschraub- bzw. Kopfhülse versehen, welche unter Zwischenschaltung von Dichtmitteln aus einem dehnungselastischen Werkstoff auf die Aussen- bzw. Grundhülse unter Ausübung eines Pressdruckes auf die Dichtkörperschüttung aus kugel- oder stabförmigen zusammenpressbaren Dichtkörpern aufsetzbar ist.

Die in den Dichtraum eingefüllten Dichtkörper erfüllen dessen Hohlräume vollständig und umschliessen damit auch dichtend die Kabelenden und, wenn der Dichtraum mit dem Muffenraum einteilig ausgebildet ist, auch die an die Kabelenden angeschlossenen Verbindungselemente. Infolge der Druckausübung durch das Aufschrauben der Einschraubhülse kann das Volumen der Dichtkörperschüttung in der zur Erreichung der erforderlichen Dichte der Schüttung infolge des Pressdruckes verringert werden.

Die Einschraubhülse kann einstückig oder längsgeteilt sein. Die längsgeteilte Aussenhülse und/oder Einschraubhülse sind in an sich bekannter Weise mittels Spannelementen zusammengehalten sein, welche aus metallischen oder aus Kunststoff bestehenden Spannringen gebildet sind.

In Abwandlung der oben beschriebenen Ausbildungsweise der Aussenhülse kann diese auch ungeteilt oder auch zwei- oder mehrstückig in Querrichtung zur Kabellängsachse unterteilt sein.

Dabei kann ein von einer Grundhülse und einer Kopfhülse umschlossener Dichtraum geschaffen sein, der mit einer das/oder die Kabel allseitig dichtend umschliessenden Schüttung aus kugel- oder stabförmigen, granulierten, unter Druckwirkung zusammenpressbaren Dichtkörpern befüllbar ist.

Von wesentlicher Bedeutung ist der Vorschlag, dass zwischen Grundhülse und Kopfhülse eine beide Hülsen im entspannten Zustand beabstandete elastisch verformbar zusammendrückbare, dem Hülsenquerschnitt angepasste Hülsendichtung vorgesehen ist.

Die Kabelmuffe kann nach weiteren wesentlichen Merkmalen unter Beibehaltung aller bereits erwähnten Vorteile und Teil-Lösungen dadurch abgewandelt sein, dass sie aus einer zylindrischen Aussenhülse und ein- oder beidendig einer aufsetz- und abnehmbaren Kopfhülse mit einer Zwischenwandung und mindestens je einer Dichtungspackung gebildet ist, durch welche ein von den von Dichtkörpern freier Muffenraum getrennter, mit Dichtkörpern befüllter Dichtraum gebildet ist.

Durch diese Ausbildungsweise wird der zusätzliche Vorteil erreicht, dass der Muffenraum mit den Verbindungselementen frei von Dichtkörpern bleibt, weil diese innerhalb des durch die Zwischenwandungen jeweils abgetrennten Dichtraumes der Kopfhülse zurückgehalten sind. Dadurch wird ein vereinfachter Zugriff zu den Verbindungselementen zur Durchführung von Kontroll- oder Wartungsarbeiten oder zu Änderungen der Kabelführung ermöglicht, ohne dass die Schüttung der Dichtkörper aufgelöst und danach wieder neu hergestellt werden muss. Auf diese Weise bleibt auch die Funktionsfähigkeit der Abdichtung voll erhalten.

Dieser Ausbildungsweise ermöglicht die Ausbildung der Muffe mit einer oder mit zwei lösbaren Kopfhülsen, je nachdem, ob Kabel-Ein-bzw. Ausführungen nur an einem oder an beiden Enden nötig sind.

Erfindungsgemäss können bei dieser Ausführungsform durch Verspannen von Grund- und Kopfhülse gegeneinander die erforderlichen Druckkräfte erbracht werden, um eine genügende Pressung der Dichtkörper und damit eine ausreichende Dichtungswirkung zu erreichen. Zum Zweck der Verspannung von Grund- und Kopfhülse gegeneinander können verschiedenartige Spannvorrichtungen zweckmässig sein. Bewährt hat sich eine Vorrichtung, bei welcher in den Wandungen der Grund- und Kopfhülse wenigstens zwei Zuganker in entsprechenden Bohrungen verschiebbar geführt und an ihren einen Enden gelagert sind, deren andere Enden mit kniehebelartigen Spannvorrichtungen in Verbindung stehen. Auch kann die Spannvorrichtung in der Weise ausgestaltet sein, dass am Aussenumfang von Grund- und Kopfhülse in umfangsverteilte Widerlager Bügel von Zugstangen einhängbar sind, und dass die Zugstangen an ihren mit kniehebelartigen oder dgl. wirkenden Spannvorrichtungen verbunden sind.

Weitere Besonderheiten und Merkmale der Erfindung sind in der Zeichnung anhand von Ausführungsbeispielen dargestellt und im folgenden näher erläutert. Es zeigen
- Fig. 1: einen Längsschnitt durch eine Kabelmuffe nach der Erfindung,
- Fig. 2: einen Querschnitt A - A gem. Fig. 1,
- Fig. 3: einen Längsschnitt durch eine Kabelmuffe nach der Erfindung in einer anderen Ausführung,
- Fig. 4: einen Längsschnitt durch eine Kabelmuffe nach der Erfindung in einer weiter abgewandelten Ausführung,
- Fig. 5: einen horizontal verlaufenden Schnitt A-B durch die untere Kopfhülse,
- Fig. 6: eine Längsschnitt durch eine weiterhin umgestaltete Ausführung einer Kabelmuffe nach der Erfindung.

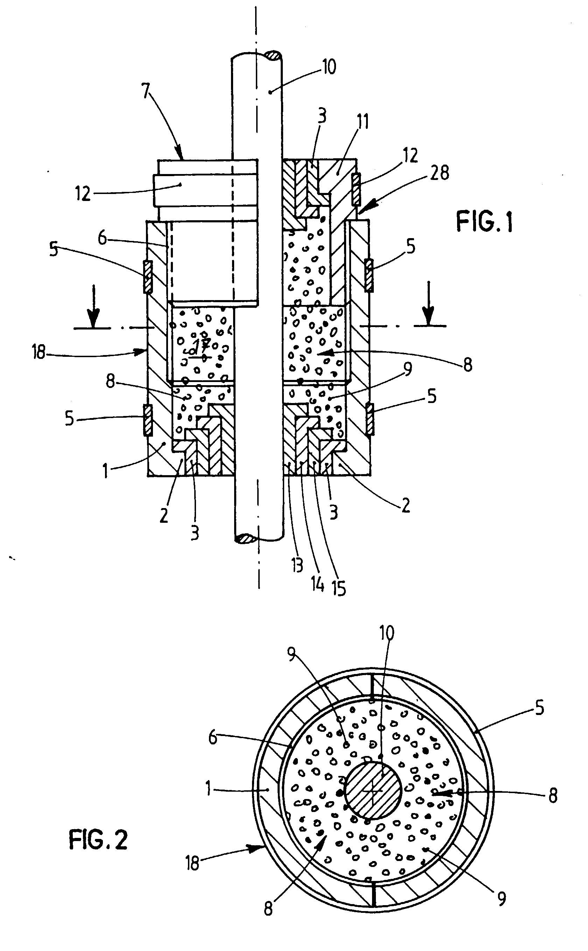

In den Fig. 1 und 2 sind die längsgeteilte Aussenhülse mit 1 und die ebenfalls längsgeteilte Einschraubhülse mit 7 bezeichnet. Diese beiden Hülsen der Muffe werden durch die Spannringe 5 und 12 zusammengespannt.

Die Aussenhülse 1 wird nach unten durch einen Ringbund 2 begrenzt, auf den sich der äussere Dichtungsring 3 und auf diesen die weiteren Dichtungsringe 13, 14 und 15 abstützen. Diese dienen in bekannter Weise dazu, den Kabelausgang an die Dicke der Kabelisolierung anzupassen. Durch diese Anpassung wird auch die erforderliche Abdichtung erzielt, um ein Durchpressen von Dichtkörpern 9 aus dem Dichtraum 8 bei der Druckausübung durch die Einschraubhülse 7 zu verhindern. Mittels ihres Aussengewindes 6 wird die Einschraubhülse 7 in die Aussenhülse 1 eingeschraubt; dabei dringt sie in den Dichtraum 8 ein und verkleinert dessen Volumen, wobei die Dichtkörper-Schüttung 17 zusammengepresst wird, so dass sie als nahezu homogene Masse das oder die Kabel allseitig abdichtend umschliesst und den Dichtraum 8 vollständig ausfüllt. Mit 28 ist die bei abgenommener Einschraubhülse offene Einfüllöffnung bezeichnet.

Auch die Einschraubhülse 7 ist mit einem Ringbund 11 versehen, auf den sich die Dichtungsringe 3, 13, 14 abstützen, so dass auch nach oben eine gute Abdichtung des Dichtraumes im Bereich der Einschraubhülse 7 gewährleistet ist.

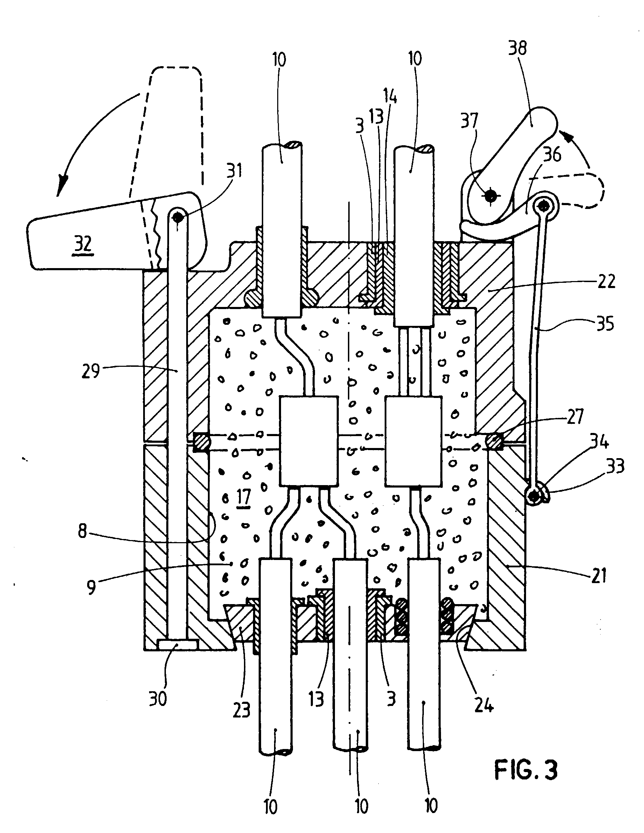

Die Schnittdarstellung nach Fig. 3 zeigt eine abgewandelte Ausbildungsweise der Kabelmuffe nach der Erfindung, welche quer zur Kabellängsrichtung geteilt ist und aus der Grundhülse 21 und der Kopfhülse 22 besteht. Die Dichtung 27 zwischen beiden Hülsen ist der Einfachheit halber als Dichtring dargestellt; sie kann auch in der oben beschriebenen Art und Weise in zylindrischer Form teleskop- oder schlauchartig ausgebildet sein.

Die Grundhülse 21 ist nach unten durch einen Bodeneinsatz 23 abgeschlossen, der sich auf den konisch zulaufenden Umrandungsflächen 24 abstützt. Der Bodeneinsatz ist im Ausführungsbeispiel mit drei Kabelausführungen dargestellt, bei denen verschiedene an sich bekannte Dichtungs-Ausbildungen angewendet sind, so dass aus der Dichtkörper-Schüttung 17 keine Dichtkörper 9 entlang den Kabelmänteln 10 austreten können. Auch sind die Kabeleinführungen im Bereich der Kopfhülse in an sich bekannten Ausführungsweisen dargestellt.

Das Verspannen der Kopfhülse 22 mit der Grundhülse 21 kann auf verschiedene Weise ausgeführt sein. Im Ausführungsbeispiel sind zwei Verspannmethoden dargestellt. Auf der linken Seite ist in die Wandung der beiden Hülsen ein Zuganker 29 in entsprechenden Bohrungen geführt und am unteren Ende 30 mittels eines Ankerkopfes befestigt. Die Spannvorrichtung 31, 32 ist als Kniehebel ausgebildet und in gespannter Stellung gezeigt. Mittels eines um den Bolzen 37 kippbaren Exzenterhebels 38 und dem Stellhebel 36 kann die Zugstange 35 nach oben gezogen werden; sie ist mittels eines Bügels 34 in ein Widerlager 33 eingehängt, welches an der Aussenwandung der Grundhülse 21 angeordnet ist.

Um den Dichtraum 8 vollständig mit der Schüttung 17 zu füllen, kann in der Kopfhülse 22 eine nicht dargestellte, verschliessbare Einfüllöffnung vorgesehen sein. Nach dem Einfüllen der Dichtkörper 9 wird durch Spannen der Spannelemente der Dichtraum verkleinert und die Pressung der Schüttung bewirkt. Nach den Fig. 1 bis 3 ist der gesamte Muffenraum als Dichtraum 8 ausgebildet und das oder die Kabel einschliesslich ihrer Verbindungselemente sind allseitig von den Dichtkörpern 9 der Schüttung 17 umgeben. Bei Montage- oder Reparaturarbeiten kann die Muffe geöffnet werden und nach Entfernen der Dichtkörper 9 sind die Verbindungsstellen zugänglich. Nach Beendigung der Arbeit müssen die Dichtkörper wieder eingefüllt werden bevor die Muffe verschlossen wird.

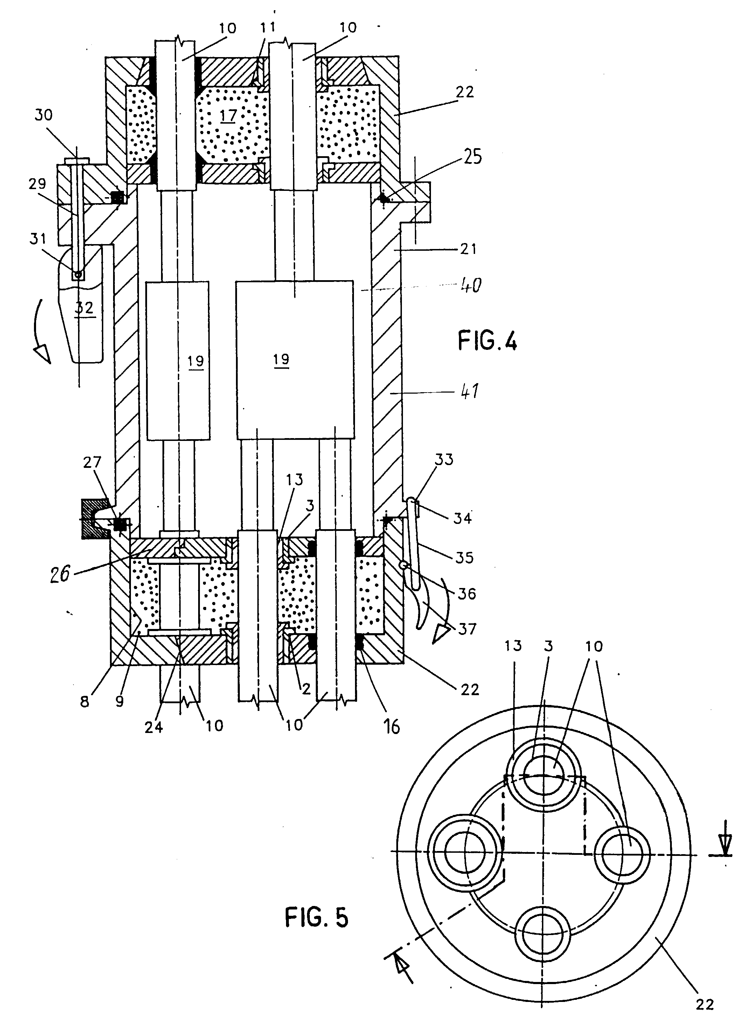

In den Fig. 4 bis 6 sind zwei abgewandelte Ausführungsbeispiele der erfindungsgemässen Kabelmuffe dargestellt, die sich von denen der Fig. 1 bis 3 dadurch unterscheiden, dass der Innenraum nicht vollständig als ein mit Dichtkörpern 9 gefüllter Dichtraum 8 ausgebildet ist, sondern dass der mit Dichtkörpern 9 gefüllte Dichtraum durch wenigstens eine Zwischenwandung 26 unterteilt und dadurch wenigstens ein von Dichtkörpern freier Muffenraum 40 geschaffen ist. Dabei ist vorgesehen, dass die Zwischenwandung 26 jeweils mit der zugeordneten Kopfhülse 22 verbunden ist, so dass beim Entfernen der Kopfhülse 22 nach dem Öffnen der Spannvorrichtungen 29 bis 32 bzw. 33 bis 37 sich die Dichtkörperpackung nicht herauslöst und zerfällt, sondern durch die jeweilige Zwischenwandung 26 in dem separaten Dichtraum 8 gehalten wird. Durch diese Ausbildungsweise wird es ermöglicht, dass Kontroll-, Wartungs- oder Umschaltungsarbeiten an den Verbindungsmuffen 19 ungestört durchführbar sind, ohne dass die Funktionsfähigkeit der Dichtkörperanordnung im Bereich der Kopfhülse 22 beeinträchtigt wird. Nach Beendigung dieser Arbeiten kann die abgenommene Kopfhülse 22 wieder aufgesetzt und festgespannt werden, ohne dass eine Beeinträchtigung der Dichtwirkung eintritt.

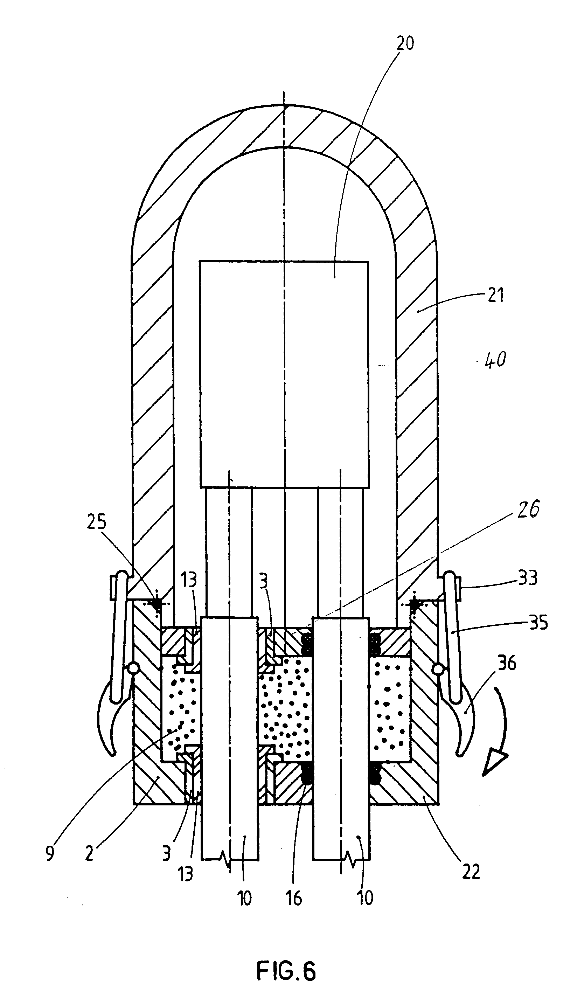

Die Fig. 4 und 5 zeigen einen Längs- und einen Querschnitt A-B durch eine solche Ausbildungsweise, bei welcher der Muffenraum 40 an beiden Enden des zylindrischen Hülsenmantels 41 durch je eine Zwischenwandung 26 vom Dichtraum 8 mit den Dichtkörpern 9 getrennt ist. Die Fig. 6 lässt erkennen, dass bei einer Muffen-Ausbildung mit Kabelausgängen an nur einer Stirnseite auch nur eine Zwischenwandung 26 erforderlich ist; im übrigen werden die gleichen Vorteile wirksam, wie sie bezl. der Ausführung nach den Fig. 4 und 5 angegeben sind.

## Patentansprüche

1. Verfahren zum Abdichten von Kabelmuffen zum Verbinden und/oder Verzweigen von Energie- und Nachrichtenkabeln mit wenigstens einem Dicht- oder Muffenraum (8, 40), in dem die zu verbindenden oder zu verzweigenden Kabel (10) mit ihren Verbindungselementen (19) zusammengeführt werden, wobei der im Muffenkörper (18) gebildete Dichtraum (8) bis auf eine verschliessbare Einfüllöffnung abgeschlossen wird,
dadurch gekennzeichnet, dass
a) durch die Einfüllöffnung der Dichtraum (8) mit einer ihn völlig ausfüllenden Schüttung aus kugel- oder stabförmigen, granulierten und zusammenpressbaren Dichtkörpern (9) gefüllt und darauf
b) diese Schüttung (17) durch Ausübung eines mechanischen Druckes mit einer zur elastischen Verformung der Dichtkörper (9) ausreichenden Druckkraft zusammengepresst wird, so dass die Dichtkörper (9) eine nahezu homogene, den Dichtraum (8) ausfüllende Dichtungsmasse bilden,
und darauf
c) der Dichtraum (8) unter Aufrechterhaltung der Druckkraft abgeschlossen wird.

2. Verfahren nach Anspruch 1, dadurch gekennzeichnet, dass die in wenigstens einem in der Kabelmuffe (18) gebildeten Dichtraum (8) zusammengeführten Kabel (10) von der Schüttung aus den Dichtkörpern (9) allseitig umgeben werden.

3. Verfahren nach Anspruch 1, dadurch gekennzeichnet, dass die zu verbindenden Kabel (10) mit ihren Verbindungselementen in einem Muffenraum (40) zusammengeführt werden, welcher gegenüber dem oder den Dichtraum oder Dichträumen (8) abgetrennt wird, und dass der oder die Dichträume (8) mit Dichtkörpern (9) gefüllt und diese unter einen Pressdruck gesetzt und gehalten werden.

4. Verfahren nach einem der Ansprüche 1 bis 3, dadurch gekennzeichnet, dass die Dichtkörper (9) aus einem Elastomer mit einer Shore-Härte von A 40 bis 80 bestehen.

5. Verfahren nach Anspruch 4, dadurch gekennzeichnet, dass die Dichtkörper (9) eine Shore-Härte von A 50 aufweisen.

6. Verfahren nach einem der Ansprüche 1 bis 5, dadurch gekennzeichnet, dass die Dichtkörper (9) einen Durchmesser und/oder eine Länge zwischen 0,5 und 5,0 mm aufweisen.

7. Verfahren nach einem der Ansprüche 1 bis 6, dadurch gekennzeichnet, dass die Dichtkörper (9) unter Druck auf ein Volumen von etwa 60 bis 80 Vol-% verdichtet werden.

8. Kabelmuffe zum Verbinden und/oder Verzweigen von Energie- und Nachrichtenkabeln, insbesondere für Kabelgarnituren, mit einer zylindrischen einteiligen oder längsgeteilten Aussenhülse für die Anwendung des Verfahrens nach wenigstens einem der Ansprüche 1 bis 7, dadurch gekennzeichnet, dass die Aussen- bzw. Grundhülse (1; 21) an wenigstens einem Ende mit einer abnehmbaren, den mit Dichtkörpern (9) gefülltem Dichtraum (8) abschliessenden Einschraub- bzw. Kopfhülse (7; 22) versehen ist, welche unter Zwischenschaltung von Dichtmitteln (3; 25; 27) aus einem dehnungselastischen Werkstoff auf die Aussen- bzw. Grundhülse (1; 21) unter Ausübung eines Pressdruckes auf die Dichtkörperschüttung aus kugel- oder stabförmigen, zusammenpressbaren Dichtkörpern (9) aufsetzbar ist.

9. Kabelmuffe nach Anspruch 8, dadurch gekennzeichnet, dass die längsgeteilte, mittels Spannringen (5) zusammengehaltene, zylindrische Aussenhülse (1) kabelausgangsseitig einen Ringbund (2) als Widerlager für wenigstens einen, aus einem dehnungselastischen Werkstoff bestehenden Dichtungsring (3) dient, und die kabeleingangsseitig ein Innen-Schraubgewinde (4) aufweist, in welches mit ihrem Aussengewinde (6) eine mit der Kabel-Eingangsöffnung versehene Einschraubhülse (7) einschraubbar ist, durch welche eine den Dichtraum (8) ausfüllende Schüttung aus das oder die Kabel (10) allseitig dichtend umschliessenden, kugel- oder stabförmigen, granulierten Dichtkörpern (9) zusammenpressbar ist.

10. Kabelmuffe nach Anspruch 9, dadurch gekennzeichnet, dass die Einschraubhülse (7) längsgeteilt und mittels Spannelementen (12) von aussen verspannbar ist.

11. Kabelmuffe nach Anspruch 8, dadurch gekennzeichnet, dass sie einen von der Grundhülse (21) und der Kopfhülse (22) allseitig umschlossenen Dichtraum (8) aufweist, der mit einer das/oder die Kabel (10) allseitig dichtend umschliessenden Schüttung aus kugel- oder stabförmigen, granulierten, unter Druckwirkung zusammenpressbaren Dichtkörpern (9) befüllbar ist.

12. Kabelmuffe nach Anspruch 11, dadurch gekennzeichnet, dass zwischen Grundhülse (21) und Kopfhülse (22) eine beide Hülsen im entspannten Zustand beabstandete, elastisch verformbar zusammendrückbare, dem Hülsenquerschnitt angepasste Hülsendichtung (27) vorgesehen ist.

13. Kabelmuffe nach Anspruch 8, dadurch gekennzeichnet, dass sie aus einer zylindrischen Aussenhülse (41) und ein- oder beidendig einer aufsetz- und abnehmbaren Kopfhülse (22) mit einer Zwischenwandung (26) und mindestens je einer Dichtungspackung (16) gebildet ist, durch welche wenigstens ein von dem von Dichtkörpern (9) freien Muffenraum (40) getrennter, mit Dichtkörpern (9) befüllter Dichtraum (8) gebildet ist.

14. Kabelmuffe nach einem oder mehreren der Ansprüche 8 und 11 bis 13, dadurch gekennzeichnet, dass in den Wandungen der Grund- und Kopfhülse (21, 22) wenigstens zwei Zuganker (29) in entsprechenden Bohrungen verschiebbar geführt und an ihren einen Enden (30) gelagert sind, deren andere Enden mit kniehebelartigen Spannvorrichtungen (31, 32) in Verbindung stehen.

15. Kabelmuffe nach einem oder mehreren der Ansprüche 8 und 11 bis 13, dadurch gekennzeichnet, dass am Aussenumfang von Grund- und Kopfhülse (21, 22) in umfangsverteilte Widerlager (33) Bügel (34) von Zugstangen (35) einhängbar sind, und dass die Zugstangen (35) an ihren Enden mit kniehebelartigen oder dgl. wirkenden Spannvorrichtungen (36, 37, 38) verbunden sind.

## Claims

1. Process for sealing cable sleeves for joining and/or branching of power and telecommunications cables with at least one tight or sleeve compartment (8, 40) in which the cables (10) to be joined or branched meet their connectors (19) and, on this occasion, the tight compartment (8) formed within the sleeve body (18) is sealed, except for a locking feed opening,
characterized in that
a) by means of the feed opening, the tight compartment (8) is fed with a charge of granulated and compressible sealers (9) having the shape of balls or bars, and then
b) this charge (17) is compressed by exerting a mechanical pressure of which the force will be sufficient for the strain to the sealers (9) so that the latter will form an almost homogenous proofing compound which fills up the tight compartment (8), and then
c) the tight compartment (8) will be sealed and the force of pressure maintained.

2. Process according to claim 1, characterized in that the cables (10) meeting in at least one tight compartment (8) formed within the cable sleeve (18) will, on all sides, be surrounded by the charge of sealers (9).

3. Process according to claim 1, characterized in that the cables (10) to be linked will meet their connectors in a sleeve compartment (40) separated in front of the single or the several tight compartments (8) and, further, that the only or several tight compartments (8) have been filled with sealers (9) which will be put and maintained under pressure.

4. Process according to one of the claims 1 to 3,
characterized in that
the sealers (9) consist of an elastomer with a Shore hardness between A 40 and A 80.

5. Process according to claim 4, characterized in that the sealers (9) have a Shore hardness of A 50.

6. Process according to one of the claims 1 to 5,
characterized in that
the sealers (9) show a diameter and/or a length between 0, 5 and 5, 0 mm.

7. Process according to one of the claims 1 to 6,
characterized in that
the sealers (9) are compressed to approx. 60 to 80% by volume.

8. Cable sleeve for joining and/or branching of power and telecommunications cables, especially for cable fittings, comprising an external bushing, in one cylindric part or longitudinally split, to apply the process according to at least one of the claims 1 to 7,
characterized in that
the external or main bushing (1, 21) has, at least at one end, been provided with a removable screw-in or head bush (7, 22) to close the tight compartment (8) filled with sealers (9), and this bush can be mounted on the external or main bushing (1, 21) by inserting some packing elements (3, 25, 27) of a material showing elasticity of extension and by exerting pressure to the charge of compressible, spherical or bar-shaped sealers (9).

9. Cable sleeve according to claim 8, characterized in that the cylindrical external bushing (1), longitudinally split and held together by means of some straining rings (5), shows, at the side of the cable outlet, a collar (2) as a buttress for at least one packing ring (3) of a material having elasticity of extension and, at the side of the cable inlet, an internal screw thread (4) into which a screw-in bush (7) can be screwed by means of its external thread (6), this bush being provided with the cable inlet opening allows to compress a charge of granulated sperical or bar-shaped sealers (9) which entirely fills the tight compartment (8) and hermetically encloses the single or the several cables (10) from all sides.

10. Cable sleeve according to claim 9, characterized in that the screw-in bush (7) has longitudinally been split and can be tightened from outside using tension elements (12).

11. Cable sleeve according to claim 8, characterized in that it shows a tight compartment (8), enclosed on all sides by the main bushing (21) and the head bushing (22), which can be filled with a charge of compressible spherical or bar-shaped sealers (9) to hermetically surround the single or the several cables (10) allover, sealers being granulated.

12. Cable sleeve according to claim 11, characterized in that between main bushing (21) and head bushing (22), a compressible and strainable packing (27), duly adjusted to the cross-section of the bushing, has been provided and will space the two bushings in the released state.

13. Cable sleeve according to claim 8, characterized in that it comprises a cylindrical external bushing (41) and, at one or both ends, a detachable head bushing (22) with a partition (26) and, at least, one each packing (16) by which at least one tight compartment has been formed, filled with sealers (9) and separated from the sleeve compartment (40) not containing any sealers (9).

14. Cable sleeve according to one or more of the claims 8 and 11 to 13, characterized in that within the walls of the main and head bushing (21, 22), at least two tension rods (29) will be movable in corresponding bores and supported at the ends (30) of one side whilst the ends of the other side are connected with toggle-type fasteners (31, 32).

15. Cable sleeve according to one or more of the claims 8 and 11 to 13, characterized in that at the circumference of the main and head bushing (21, 22), some bows (34) of the connecting rods (35) can be hung into peripherally spread buttresses (33) and, moreover, that the ends of the connecting rods (35) have been linked with toggle type fasteners or tensioning devices (36, 37, 38) of similar effect.

## Revendications

1. Procédé d'étanchéification de manchons de câbles pour la jonction et/ou la dérivation de câbles d'énergie et de télécommunication avec, au moins, une seule chambre hermétique ou de manchon (8, 40) où s'unissent les câbles à joindre ou à brancher (10) à leurs attaches (19) et, par cela, se scelle la chambre hermétique (8) formée dans le corps de manchon (18), sauf l'ouverture de remplissage obturable,
caractérisé par ce que
a) par l'ouverture de remplissage, la chambre hermétique (8) sera pleinement remplie d'un garnissage de corps d'étanchement (9) granulés, compressibles et en forme de bille ou de bâtonnet, et qu'ensuite,
b) par l'exercice d'une pression mécanique ayant une force suffisante pour la déformation élastique des corps de étanchement (9), ce garnissage sera tellement comprimé que les corps d'étanchement (9) formeront un matériel d'étanchéité quasi homogène qui remplira la chambre hermétique (8), et qu'ensuite,
c) la chambre hermétique (8) sera scellée tout en conservant la force de compression.

2. Procédé selon revendication 1, caractérisé par ce que les câbles (10) réunis dans, au moins, une seule chambre hermétique (8) formée à l'intérieur du manchon (18), seront enveloppés du garnissage consistant en des corps de étanchement (9).

3. Procédé selon revendication 1, caractérisé par ce que les câbles (10) à joindre seront réunis, avec leurs éléments de fixation, dans une chambre de manchon (40) qui sera séparée en face de la seule ou des chambres hermétiques (8), et que la seule ou les chambres hermétiques (8) seront remplies de corps d'étanchement mis et tenus sous pression.

4. Procédé selon une des revendications 1 à 3, caractérisé par ce que
les corps d'étanchement (9) consistent en un élastomère ayant une dureté Shore entre A 40 et A 80.

5. Procédé selon revendication 4, caractérisé par ce que les corps d'étanchement (9) présentent une dureté Shore de A 50.

6. Procédé selon une des revendications 1 à 5, caractérisé par ce que
les corps d'étanchement (9) ont un diamètre et/ou une longueur entre 0, 5 et 5, 0 mm.

7. Procédé selon une des revendications 1 à 6, caractérisé par ce que
les corps d'étanchement (9) seront comprimés, par l'effet de pression, à un volume de 60 à 80%.

8. Manchon de câble pour la jonction et/ou la dérivation de câbles d'énergie et de télécommunication, particulièrement destiné à des garnitures de câbles, comportant une douille extérieure cylindrique d'une seule pièce ou longitudinalement divisée, pour l'exploitation du procédé selon, au moins, une seule des revendications 1 à 7, caractérisé par ce que
la douille extérieure respectivement la douille de base (1, 21) a été dotée, au moins à un seul bout, d'une douille filetée respectivement d'une douille de tête amovible (7, 22) scellant la chambre hermétique (8) remplie de corps d'étanchement (9), douille filetée ou de tête qui pourra se monter sur la douille extérieure respectivement de base (1, 21) par l'insertion des moyens d'étanchement (3, 25, 27) en matière élastique concernant l'extension et par l'exercice d'une pression sur la charge de corps d'étanchement consistant en des corps de étanchement (9) compressibles sous forme de bille ou de bâtonnet.

9. Manchon de câble selon revendication 8, caractérisé par ce que
la douille extérieure cylindrique (1), longitudinalement divisée et tenue ensemble par des bagues de serrage (5), présente du côté 'sortie de câble', un collet annulaire (2) comme butée pour, au moins, une seule bague d'étanchéité (3) en matière élastique concernant l'extension, et du côté 'entrée de câble' un filet femelle (4) dans lequel on pourra visser, à l'aide de son filet extérieur (6), une douille à insertion (7) pourvue de l'ouverture d'entrée de câble et permettant de comprimer une charge de corps d'étanchement granulés (9) sous forme de bille ou de bâtonnet, charge remplissant pleinement la chambre hermétique (8), enveloppant le ou les câbles (10) et les rendant étanches.

10. Manchon de câble selon revendication 9, caractérisé par ce que
la douille à insertion (7) a été longitudinalement divisée et qu'elle pourra se tendre de dehors par des éléments de serrage (12).

11. Manchon de câble selon revendication 8, caractérisé par ce que
celui-ci présente une chambre hermétique (8) enveloppée par la douille de base (21) et la douille de tête (22), chambre qui pourra se remplir d'une charge de corps d'étanchement (9) granulés sous forme de bille ou de bâtonnet, charge compressible et entourant le ou les câbles (10) hermétiquement de tous les côtés.

12. Manchon de câble selon revendication 11, caractérisé par ce que
entre la douille de base (21) et la douille de tête (22), un joint d'étanchéité (27) a été prévu, joint compressible, élastiquement déformable, adapté à la coupe de douille et, aussi, écartant les deux douilles en état détendu.

13. Manchon de câble selon revendication 8, caractérisé par ce que
il se forme d'une douille extérieure cylindrique (41) et, à un seul ou aux deux bouts, d'une douille de tête (22), montable et amovible, comportant une paroi intermédiaire (26) et, au moins, chaque fois une garniture d'étanchéité (16) et, par cette dernière, s'obtient, au moins, une seule chambre hermétique (8) remplie de corps d'étanchement (9) et séparée de la chambre de manchon (40) qui est libres de corps d'étanchement (9).

14. Manchon de câble selon une seule ou plusieurs des revendications 8 et 11 à 13, caractérisé par ce que en les parois de la douille de base et de la douille de tête (21, 22), deux ancres de tirage (29), au moins, glissent dans des alésages correspondants et se logent à leurs bouts (30) de l'un côté tandis que ceux de l'autre côté sont en liaison avec des dispositifs tendeurs (31, 32) du type genouillère.

15. Manchon de câble selon une seule ou plusieurs des revendications 8 et 11 à 13, caractérisé par ce que à la circonférence extérieure des douilles de base et de tête (21, 22), des étriers (34) appartenant aux tirants (35), pourront s'accrocher dans des butées (33) réparties sur la circonférence, et que les bouts de ces tirants (35) ont été reliés à des dispositifs tendeurs (36, 37, 38) du type genouillère ou à des mécanismes effectuant une action similaire.
